# EUROPEAN PATENT SPECIFICATION

(11) **EP 0 723 886 B1**
(45) Date of publication and mention of the grant of the patent: **10.06.1998**
(21) Application number: 96200067.5
(22) Date of filing: 12.01.1996
(51) Int. Cl.: B60J 7/057

(54) **Control device for an electrically operable open-roof construction for a vehicle**
Vorrichtung zur Steuerung einer elektrisch bedienbaren Schiebedacheinrichtung für Kraftfahrzeug
Dispositif de contrôle pour assemblage de toit ouvrant pour véhicule avec actionnement électrique

(30) Priority: 30.01.1995 NL 9500160
(43) Date of publication of application: 31.07.1996
(73) Proprietor: Vermeulen Hollandia Octrooien II B.V., 2003 RX Haarlem (NL)
(72) Inventor: Huyer, Johannes N., NL-1991 BN Velserbroek (NL)
(74) Representative: de Bruijn, Leendert C.

(56) References cited:
- EP-A- 0 004 970
- EP-A- 0 297 225
- EP-A- 0 310 153
- US-A- 5 334 876

## Description

The present invention relates to a control device for an electrically operable open-roof construction for a vehicle, provided with a central control unit, an electric motor, connected to one output thereof, for driving a closing element of the open-roof construction, and a control element, connected to an input of the control unit, for operating the electric motor, the control unit having a further input to which a vehicle switch for operating a vehicle function can be connected, the control unit being set up such that, on specific operation of the vehicle switch, said unit automatically actuates the electric motor so as to move the closing element into the closed position.

In the case of an embodiment of a control device of this type, for an electrically operable sliding roof, which is known in practice, a so-called override switch is fitted. This additional switch serves to set the automatic closing function of the control device to non-active for an indefinite period when the ignition is switched off or the door is closed with the aid of the vehicle switch. To restore the automatic closing function the override switch has to be operated again (see for instance US-A-5 334 876).

It will be clear that the said override switch is not practical, whilst the addition of the switch has the effect of raising the cost price of the control device.

The aim of the present invention is, therefore, to provide a control device of the type mentioned in the preamble of claim 1 with which the said drawbacks are effectively eliminated.

To this end, the control device according to the invention is defined by the features of claim 1.

By means of the invention it is possible, without an additional override switch, nevertheless to switch off the automatic closing function once only during the integral delay time, which needs to be only a few seconds, using the control element already present, and to give the user of the vehicle the opportunity to decide whether he or she wishes to allow the closing element to remain in the open position or wants to let it close automatically. With this arrangement, the circuit can be such that even after the closing movement of the closing element has already started, the control element can be operated to stop the closing movement. If a user of the vehicle does not wish to keep the closing element open, the delay has no adverse effect whatsoever on the ease of use, because closing proceeds further automatically without the user having to wait for anything at all.

In the majority of countries an automatic closing movement of the closing element when the ignition in the vehicle is off is legally permitted only if the control device for the open-roof construction is provided with an anti-trapping safety device complying with the regulations. A facility of this type is usually realised by a measurement and control system based on a microprocessor. In this case all the hardware which is needed for the automatic closing movement of the closing element on the basis of a time delay is already present, so that the addition of the proposed control does not have to lead to a rise in the cost price.

The invention will be explained in more detail below with reference to the drawing, which shows an illustrative embodiment of the control device according to the invention.

Fig. 1 is a highly diagrammatic perspective view of a control device for a sliding roof of a vehicle according to the prior art, the control device being shown on a very large scale compared with the sliding roof.

Fig. 2 is a view, corresponding to that in Fig. 1, of an illustrative embodiment of the control device according to the invention.

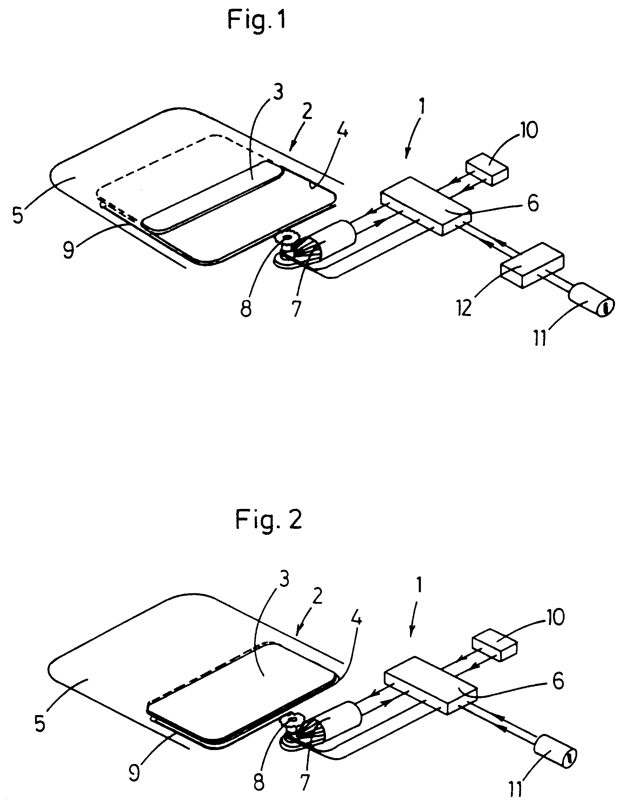

Fig. 1 shows a control device 1 which is intended for controlling the movements of the moving part of an open-roof construction 2, which in this case consists of a sliding roof with a movable panel 3 but, of course, can also consist of all sorts of other roof constructions, such as spoiler roofs, tilt/slide roofs, folding roofs, cabriolet roofs and the like. In Fig. 1 the sliding roof 2 is shown in a position in which the panel 3 is exposing an opening 4 in the sliding roof frame 5 and in the vehicle roof, which is not shown. In this case the heart of the control device 1 is a central control unit 6 with a microprocessor. An electric motor 7 is connected to said control unit 6, which electric motor is, in this embodiment, drivably connected via a delay drive gear 8 to a drive cable 9, which is connected to the panel 3.

The control device 1 can be actuated with the aid of a control element which is constructed, for example, as a control switch 10 and the operation of which determines the opening and closing movement.

The central control unit 6 is further provided with a control function by means of which, after the vehicle ignition connected to the control unit 6 has been switched off, the panel 3 of the sliding roof 2, if the latter is in an open position, is automatically moved into the closed position by means of the control unit 1. For situations where the user of the vehicle wishes to keep the panel 3 open after switching off the vehicle ignition 11, it is necessary, with the aid of an override switch 12, inserted between the ignition 11 and the control unit 6, for a reversal to take place into a switched-off position in which the automatic closing function is rendered inoperative. In order to restore the automatic closing function, the override switch must be switched back to the other position again.

Fig. 2 shows an illustrative embodiment of the control device according to the invention, in which it can be seen that the override switch 12 has been dispensed with, whilst the other components are the same as those in the embodiment according to Fig. 1. According to the invention, therefore, in principle no additional components are required for switching off the automatic closing movement, if desired, after switching off the ignition 11. This is realised by programming the software in the microprocessor of the central control unit 6 in such a way that there is a time delay or rest period after the ignition 11 is switched off. If said delay or rest period of, for example, a few seconds has elapsed without interruption, the panel 3 of the open-roof construction 2 will, if it was in an open position, automatically be moved into the closed position with the aid of the electric motor 7. If, however, the control switch 10 of the open-roof construction is actuated during the delay or rest period, a circuit breaker in the central control unit 6 comes into effect and the automatic closing movement is not activated. Said circuit breaker is a once only circuit breaker, so that at a subsequent opportunity the default setting in the control unit 6 once again leads to automatic closing of the panel 3 after the delay or rest period has elapsed. Incidentally, the circuit breaker can also be activated by means of the control switch 10 if the control unit 6 has already given a pulse to the electric motor 7 and the panel 3 is therefore already being moved into the closed position by the electric motor 7. In this case the panel 3 will stop in an intermediate position.

The microprocessor of the control unit 6 also controls an anti-trapping safety device in the open-roof construction 2, which safety device can be seen by feedback loops in the drawing.

The invention is not restricted to the illustrative embodiment shown in the drawing and described above, which can be varied in various ways within the scope of the invention. For instance, the vehicle switch could also consist of a remote control for the door locks instead of the ignition switch 11, in which case, of course, the control switch for the open-roof construction would then also have to be incorporated in the remote control.

## Claims

1. Control device (1) for an electrically operable open-roof construction (2) for a vehicle, provided with a central control unit (6), an electric motor (7), connected to one output thereof, driving a closing element (3) of the open-roof construction, and a control element (10), connected to an input of the control unit (6), operating the electric motor, the control unit having a further input to which a vehicle switch for operating a vehicle function is connected, the control unit (6) being set up such that, on specific operation of the vehicle switch, said unit automatically actuates the electric motor so as to move the closing element (3) into the closed position, characterised in that the control unit is provided with a circuit which provides for a time delay between operation of the vehicle switch (11) and actuation of the electric motor (7) so as to move the closing element (3) into the closed position, whilst a circuit breaker is incorporated in the circuit, such that the automatic closing movement of the closing element is prevented or stopped once only by operating the control element (10) for the electric motor (7).

2. Control device according to Claim 1, wherein the control unit is equipped with a microprocessor.

3. Control device according to Claim 2, wherein the microprocessor also controls an anti-trapping safety device for the closing element (3).

4. Control device according to one of Claims 1-3, wherein the vehicle switch comprises the ignition for starting and stopping the vehicle drive.

5. Control device according to one of the preceding claims, wherein the time delay is set for a few seconds.

6. Open-roof construction provided with a control device according to one of the preceding claims.

7. Open-roof construction according to Claim 6, constructed as a sliding roof with a panel as closing element.

## Patentansprüche

1. Vorrichtung (1) zur Steuerung einer elektrisch bedienbaren Schiebedacheinrichtung (2) für Kraftfahrzeug, umfassend eine zentrale Steuerungseinheit (6), einen mit einem ihrer Ausgänge verbundenen Elektromotor (7), welcher ein Schließelement (3) der Schiebedacheinrichtung antreibt, ein mit einen Eingang der Steuerungseinheit (6) verbundenes Steuerungselement (10), durch welches der Motor gesteuert wird, wobei die Steuerungseinheit einen weiteren Eingang aufweist, mit dem ein Fahrzeugschalter zur Steuerung einer Fahrzeugfunktion verbunden ist, wobei die Steuerungseinheit (6) in der Weise ausgebildet ist, daß auf eine bestimmte Bedienung des Fahrzeugschalters hin die Steuereinheit automatisch den Elektromotor aktiviert, wodurch das Schließelement (3) in die Schließstellung überführt wird, **dadurch gekennzeichnet**, daß die Steuerungseinheit eine Schaltung aufweist, die eine Zeitverzögerung zwischen der Bedienung des Fahrzeugschalters (11) und der Aktivierung des Elektromotors (7) bewirkt um das Schließelement (3) in die Schließstellung zu überführen, während in der Verzögerungsschaltung ein Stromkreisunterbrecher vorgesehen ist, so daß die automatische Schließbewegung des Schließelements einmalig durch eine Bedienung des Steuerungselements (10) des Elektromotors (7) vermieden oder angehalten wird.

2. Steuerungsvorrichtung nach Anspruch 1, **dadurch gekennzeichnet**, daß die Steuerungseinheit einen Mikroprozessor aufweist.

3. Steuerungsvorrichtung nach Anspruch 2, **dadurch gekennzeichnet**, daß durch den Mikroprozessor auch eine Einklemmschutzvorrichtung des Schließelements (3) gesteuert wird.

4. Steuerungsvorrichtung nach einem der Ansprüche 1 bis 3, **dadurch gekennzeichnet,** daß der Fahrzeugschalter die Zündung zum Starten oder Anhalten des Fahrzeugantriebs umfaßt.

5. Steuerungsvorrichtung nach einem der vorhergehenden Ansprüche, **dadurch gekennzeichnet**, daß die Zeitverzögerung zu wenigen Sekunden gewählt ist.

6. Schiebedacheinrichtung umfassend eine Steuerungsvorrichtung nach einem der vorhergehenden Ansprüche.

7. Schiebedacheinrichtung nach Anspruch 6, ausgebildet als Schiebedach mit einem Paneel als Schließelement.

## Revendications

1. Dispositif de contrôle (1) d'un toit ouvrant (2) de véhicule actionné électriquement, comportant une unité centrale de contrôle (6), un moteur électrique (7) connecté à une sortie de cette dernière et entraînant un élément de fermeture (3) du toit ouvrant, et un élément de contrôle (10) connecté à une entrée de l'unité de contrôle (6) commandant le moteur électrique, l'unité de contrôle ayant une entrée supplémentaire à laquelle un commutateur permettant de contrôler une fonction du véhicule est connecté, et étant réglée de telle sorte que, à la suite d'une opération spécifique sur le commutateur du véhicule, ladite unité active automatiquement le moteur électrique pour déplacer l'élément de fermeture (3) vers sa position de fermeture, caractérisé en ce que l'unité de contrôle est dotée d'un circuit qui introduit un retard entre l'activation du commutateur du véhicule (11) et le déclenchement du moteur électrique (7) pour déplacer l'élément de fermeture (3) vers sa position de fermeture, un interrupteur étant incorporé dans le circuit de telle sorte que le mouvement de fermeture automatique de l'élément de fermeture est empêché ou arrêté une fois seulement par activation de l'élément de contrôle (10) du moteur électrique (7).

2. Dispositif de contrôle selon la revendication 1, dans lequel l'unité de contrôle est équipée d'un microprocesseur.

3. Dispositif de contrôle selon la revendication 2, dans lequel le microprocesseur commande également un système de contrôle anticoincement pour l'élément de fermeture (3).

4. Dispositif de contrôle selon l'une des revendications 1 à 3, dans lequel le commutateur du véhicule comporte le contact d'allumage pour démarrer ou stopper l'entraînement du véhicule.

5. Dispositif de contrôle selon l'une des revendications précédentes, dans lequel le temps de retard est réglé à quelques secondes.

6. Système de toit ouvrant doté d'un dispositif de contrôle selon l'une des revendications précédentes.

7. Système de toit ouvrant selon la revendication 6, constitué d'un toit coulissant avec un panneau comme élément de fermeture.
